Europäisches Patentamt

European Patent Office

Office européen des brevets

(19)

(11) Veröffentlichungsnummer: **0 296 618 B1**

(12) **EUROPÄISCHE PATENTSCHRIFT**

(45) Veröffentlichungstag der Patentschrift:
05.12.90

(51) Int. Cl.⁵: **B60K 15/05**

(21) Anmeldenummer: 88110124.0

(22) Anmeldetag: **24.06.88**

(54) Selbstschliessender Kraftstoffbehälterverschluss.

(30) Priorität: **25.06.87 DE 3721049**

(43) Veröffentlichungstag der Anmeldung:
**28.12.88 Patentblatt 88/52**

(45) Bekanntmachung des Hinweises auf die Patenterteilung:
**05.12.90 Patentblatt 90/49**

(84) Benannte Vertragsstaaten:
**DE FR GB IT**

(56) Entgegenhaltungen:
**EP-A- 0 223 051**
**EP-B- 0 153 677**
**DE-B- 2 405 965**
**FR-A- 778 869**
**US-A- 3 133 741**

(73) Patentinhaber: **Temtec Fahrzeugtechnik Entwicklungsgesellschaft mbH, Kranzhornweg 5, D-8201 Raubling(DE)**

(72) Erfinder: **Jansky, Jaroslav, Dipl.-Ing., Mangfallstrasse 38, D-8200 Rosenheim(DE)**
Erfinder: **Temmesfeld geb. Bauer, Angelika Barbara Maria, Kranzhornweg 5, D-8201 Raubling(DE)**

(74) Vertreter: **Kehl, Günther, Dipl.-Phys. et al, Patentanwälte Hagemann & Kehl Ismaninger Strasse 108 Postfach 86 03 29, D-8000 München 86(DE)**

## Beschreibung

Die Erfindung bezieht sich auf einen selbstschließenden Kraftstoffbehälterverschluß zur Befestigung auf einem Kraftstoffeinfüllstutzen, mit einer in Richtung auf einen Dichtsitz vorgespannten, in das Innere des Einfüllstutzens verschwenkbaren Verschlußklappe, die von einem endseitig gelagerten Schwenkarm getragen ist.

Ein solcher Kraftstoffbehälterverschluß ist aus der französischen Patentschift Nr. 778 869 bekannt.

Bei dem bekannten Kraftstoffbehälterverschluß ist eine Torsionsfeder vorgesehen, die die verschwenkbare Verschlußklappe in Richtung auf den Dichtsitz vorspannt. Beim Öffnen der Verschlußklappe durch deren Verschwenken in Richtung auf das Innere des Einfüllstutzens wird die Torsionsfeder zunehmend angespannt, so daß sich das Drehmoment in Schließrichtung ständig erhöht. Wenn die Torsionsfeder so dimensioniert ist, daß die Verschlußklappe im geschlossenen Zustand mit einem ausreichenden Drehmoment gegen den Dichtsitz vorgespannt wird, dann steigert sich das Drehmoment beim Öffnen der Verschlußklappe in einem solchen Maße, daß das Einführen der Zapfpistole in den Einfüllstutzen Schwierigkeiten bereiten kann. Die Reibung zwischen der Verschlußklappe und der eingeführten Zapfpistole ist daher so groß, daß insbesondere auch das Herausnehmen der Zapfpistole aus dem Einfüllstutzen erschwert ist. Trotz der Verwendung einer Torsionsfeder, die an sich wenig Platz beansprucht, baut der bekannte Kraftstoffbehälterverschluß so groß, daß er die Außenabmessungen des Kraftstoffeinfüllstutzens übersteigt. Der bekannte Kraftstoffbehälterverschluß ist daher nicht zur Befestigung nach Art eines Tankdeckels auf einem Kraftstoffeinfüllstutzen geeignet. In einem solchen Fall würde der bekannte Kraftstoffbehälterverschluß beträchtlich über den Mündungsrand des Kraftstoffeinfüllstutzens sowohl axial als auch radial überstehen, was bei modernen Kraftfahrzeugen völlig unakzeptabel wäre.

Desweiteren ist aus der Europäischen Patentschrift 0 153 677 ein selbstschließender Kraftstoffbehälterverschluß bekannt, der eine Druckfeder als Schließfeder ausweist, die durch eine Teleskopstangenführung unterhalb des Lagerpunktes der Verschlußklappe geführt wird. Bei dem bekannten Kraftstoffbehälterverschluß wird zwar eine günstige Drehmomentcharakteristik in Schließrichtung erzielt, die Druckfeder und ihre Teleskopstangenführung beanspruchen jedoch Platz, und begrenzen die Öffnungsbewegung der Verschlußklappe. Der bekannte Kraftstoffbehälterverschluß ist daher nur für Kraftstoffeinfüllstutzen mit ausreichender lichter Weite einsetzbar.

Der Erfindung liegt daher die Aufgabe zugrunde, einen Kraftstoffbehälterverschluß der eingangs genannten Art zu schaffen, der so klein baut, daß er nach Art eines Tankdeckels auf einem Kraftstoffeinfüllstutzen befestigt werden kann und der eine günstige Schließdrehmomentcharakteristik beim Verschwenken der Verschlußklappe aufweist. Unter einer günstigen Schließdrehmomentcharakteristik ist ein vergleichsweises großes Drehmoment bei geschlossener Verschlußklappe und ein vergleichsweises kleines Drehmoment in Schließrichtung bei geöffneter Verschlußklappe zu verstehen.

Diese Aufgabe ist dadurch gelöst, daß das freie Ende der Schwenkarmes sich auf einer etwa senkrecht zur Längsachse des Kraftstoffbehälterverschlusses verlaufenden Stützfläche abstützt, und daß an dem Schwenkarm im Bereich zwischen dem freien Ende und der Verschlußklappe eine Spanneinrichtung befestigt ist, die die Verschlußklappe in Richtung auf den Dichtsitz vorspannt.

Durch die Bauweise gemäß der Erfindung wird eine beim Öffnen der Verschlußklappe degressive Schließdrehmomentcharakteristik der Verschluß klappe erzielt. Dies ist darauf zurückzuführen, daß sich im Zuge der Öffnungsbewegung der Verschlußklappe das freie, sich auf der Stützfläche abstützende Ende des Schwenkarms der Kraftangriffslinie der Spanneinrichtung nähert, so daß der für die Verschwenkung der Verschlußklappe ausschlaggebende Helelarm verkürzt und das Drehmoment - trotz einer eventuellen Erhöhung der Kraft der Spanneinrichtung - verkleinert wird. Überraschenderweise hat sich gezeigt, daß ein Kraftstoffbehälterverschluß gemäß der Erfindung außerordentlich klein baut und trotzdem eine vollständige Öffnung, d.h. ein Verschwenken um ca. 90°, der Verschlußklappe ermöglicht.

Nach einer vorteilhaften Ausführungsform der Erfindung ist das freie Ende des Schwenkarms als Steuerkurve ausgebildet, die beim Verschwenken der Verschlußklappe über die Stützfläche gleitet. Je nach Formgebung dieser Steuerkurve kann die Schwenkbewegung der Verschlußklappe, bei der es sich nicht um eine Rotationsbewegung mit festem Drehpunkt handelt, gestaltet werden, um auf diese Weise die Verschlußklappe beim Öffnen in eine Position zu bringen, die optimal auf die vorgegebenen Randbedingungen eines Kraftstoffbehälterverschlusses abgestimmt ist.

Wird nach einer besonders vorteilhaften Ausführungsform der Erfindung die Steuerkurve so geformt, daß die Verschlußklappe im Laufe der Öffnungsbewegung in Richtung auf das Innere des Kraftstoffeinfüllstutzens translatorisch verschoben wird, so gelangt dadurch die Verschlußklappe in eine Position, in der sie um einen Winkel von nahezu 90° geöffnet werden kann und in der sie sich optimal an die rohrförmige Seitenwand des Kraftstoffbehälterverschlusses anschmiegt. Durch die Wahl der Steuerkurvenform wird darüber hinaus erreicht, daß auf die Verschlußklappe stets ein Drehmoment in Schließrichtung wirkt und die Verschlußklappe somit keinen "Totpunkt" erreicht, selbst dann, wenn sie über 90° hinaus verschwenkt würde.

Nach einer weiteren vorteilhaften Ausgestaltung der Erfindung ist die Stützfläche, auf der sich das freie Ende des Schwenkarms der Verschlußklappe abstützt, an einer Axialposition in der Nähe des Mündungsrandes des Kraftstoffeinfüllstutzens gelegen. Bei einer solchen Bauweise kann somit die Verschlußklappe praktisch in der Höhe des Mündungsrandes des Einfüllstutzens und somit am Eingang des Kraftstoffbehälterverschlusses angeordnet werden. Ein Totvolumen vor der Verschlußklappe, wo sich beispielsweise Regenwasser ansammeln könnte, das beim Öffnen der Verschlußklappe in den Kraftstoffbehälter fließt, ist somit vermieden. Dank der Tatsache, daß der erfindungsgemäße Kraftstoffbehälterverschluß klein baut, kann sogar die Stützfläche an einer Axialposition liegen, die sich vor dem Mündungsrand befindet, wenn der Kraftstoffbehälterverschluß nach Art eines Tankdeckels auf den Kraftstoffeinfüllstutzen eines Kraftfahrzeuges aufgesetzt ist.

Nach einer weiteren vorteilhaften Ausführungsform ist vorgesehen, daß die Spanneinrichtung aus einem an dem Schwenkarm angelenkten Bügel besteht, der durch mindestens eine Feder vorgespannt ist. Vorteilhaft ist ferner, wenn der Bügel in einer Axialführung geführt ist, so daß der Anlenkpunkt, an dem die Kraft der Spanneinrichtung an dem Schwenkarm angreift, in Radialrichtung unverrückbar festliegt. Hierdurch wird erreicht, daß der Schwenkarm im Laufe der Öffnung der Verschlußklappe eine präzis definierte Bewegung durchführt, die als Rotationsbewegung um den Anlenkpunkt, überlagert mit einer translatorischen Axialbewegung des Anlenkpunktes, beschrieben werden kann.

Die Feder der Spanneinrichtung ist nach einer weiteren vorteilhaften Ausführungsform der Erfindung in einem Federgehäuse angeordnet, das über den Mündungsrand des Kraftstoffbehälterverschlusses in axialer Richtung vorsteht. Dadurch wird der Innenraum des Kraftstoffbehälterverschlusses von der Spanneinrichtung und der dazugehörigen Feder freigehalten, so daß genügend freier Raum zur Aufnahme der aufgeklappten Verschlußklappe vorhanden ist. Andererseits steht das Federgehäuse nur geringfügig über den Mündungsrand des Kraftstoffbehälterverschlusses über und wirkt daher nicht störend.

Die Feder ist nach einer weiteren vorteilhaften Ausführungsform eine Druckfeder, die den Bügel in Axialrichtung drückt und auf diese Weise die Schließkraft auf die Verschlußklappe ausübt. Selbst bei einem Bruch der Feder geht daher ihre Schließkraft nicht völlig verloren, was aus sicherheitstechnischen Gründen äußerst vorteilhaft ist. Vorteilhaft ist ferner, wenn dabei zwei parallele Federn vorgesehen sind, um die Kraft auf den Bügel und somit die Verschlußklappe zu verdoppeln.

In erfinderischer Weiterführung des Erfindungsgedankens ist vorgesehen, daß an den beweglichen Teilen des Kraftstoffbehälterverschlusses eine Betätigungseinrichtung zur Betätigung eines Ventils angeordnet ist. Bei dem Ventil kann es sich um ein Ausgleichsbehälterventil oder auch ein Steuerventil zur Betätigung einer Kraftstoffdampfrückgewinnungseinrichtung handeln.

Nach einer weiteren vorteilhaften Ausführungsform kann vorzugsweise die Bewegung des freien Endes des Schwenkarmes der Verschlußklappe zur Betätigung eines Ausgleichbehälterventils ausgenützt werden. Zu diesem Zweck ist an dem freien Ende des Schwenkarmes ein Nocken befestigt, an dem sich ein axial verschiebbarer Stößel abstützt.

Der Stößel ist vorzugsweise in der Wand des Kraftstoffbehälterverschlusses geführt. Beim Öffnen der Verschlußklappe bewegt sich der Nocken in Richtung auf den Mündungsrand und gibt für den Stößel den Weg in Richtung auf den Mündungsrand frei. Ein Ventilarm, der sich am entgegengesetzten, nach innen weisenden Ende des Stößels abstützt, kann sich daher - unter Vorspannung einer Feder - in Richtung auf den Mündungsrand bewegen, wodurch das Ventil eines Ausgleichsbehälters verschlossen wird. Somit kann beim Betanken kein Kraftstoff in den Ausgleichsbehälter gelangen. Wenn jedoch die Verschlußklappe geschlossen ist, wird der Stößel in Richtung auf das Innere des Kraftstoffbehälterstutzens gedrückt, so daß das Ausgleichsventil öffnet und sich infolge einer Temperaturerhöhung ausdehnender Kraftstoff in dem Ausgleichsbehälter Platz findet.

Nach einer anderen vorteilhaften Weiterentwicklung umfaßt die Betätigungseinrichtung einen elektrischen Schalter. Dieser kann zur Betätigung eines Magnetventils zum Öffnen und Schließen des Ausgleichsbehälters verwendet werden.

Besonders vorteilhaft is dabei, wenn ein Magnetschalter (REED-Schalter) verwendet wird, zu dessen Betätigung auf den bewegten Teilen des Verschlusses (Schwenkarm oder Spanneinrichtung) ein Dauermagnet angeordnet ist. Die Kraft, die zur Betätigung des Ausgleichsbehälterventils in diesem Fall aufgebracht werden muß, ist vernachlässigbar klein.

Nach einer weiteren vorteilhaften Weiterführung des Erfindungsgedankens ist in der Verschlußklappe ein Überdrucksicherheitsventil angeordnet. Durch dieses kann gegebenenfalls ein gefährlicher Überdruck im Tankinneren abgebaut werden.

Die Erfindung wird im folgenden anhand der in den Zeichnungen schematisch dargestellten Ausführungsbeispiele näher erläutert. In den Zeichnungen sind gleiche oder ähnliche Teile mit gleichen Bezugszeichen bezeichnet. Es zeigen:

**Fig. 1:** einen Axialschnitt durch einen Kraftstoffbehälterverschluß, der für einen Kraftstoffeinfüllstutzen mit Schraubdeckel bestimmt ist;
**Fig. 2:** den Kraftstoffbehälterverschluß gemäß Fig. 1, jedoch mit geöffneter Verschlußklappe;
**Fig. 3:** einen Schnitt längs der Schnittlinie III-III in Fig. 2;
**Fig. 4:** einen Kraftstoffbehälterverschluß, der für einen Kraftstoffeinfüllstutzen mit Innenbajonett (Renk-Verschluß) bestimmt ist;
**Fig. 5:** einen Schnitt längs der Schnittlinie V - V in Fig. 4.

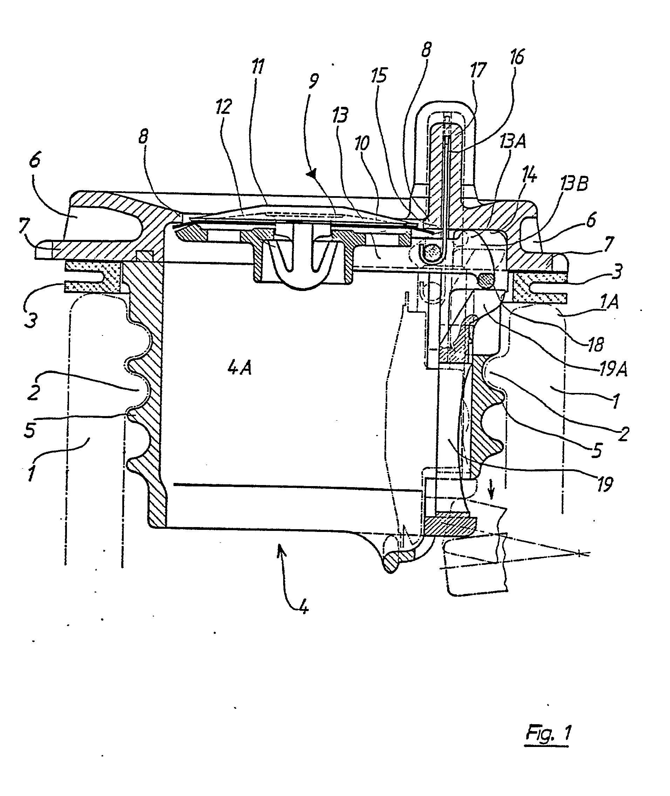

In Fig. 1 kennzeichnet das Bezugszeichen 1 einen strichliert angedeuteten Kraftstoffeinfüllstutzen eines Kraftfahrzeuges. Der Kraftstoffeinfüllstutzen weist ein Innengewinde 2 auf, das üblicherweise zur Aufnahme des Außengewindes eines Tankdeckels (nicht dargestellt) dient. Die Stirnfläche 1A des Kraftstoffeinfüllstutzen 1 dient als Auflage für eine Dichtung 3.

Anstelle des sonst üblichen Tankdeckels ist in den Kraftstoffeinfüll stutzen 1 ein selbstschließender Kraftstoffbehälterverschluß 4 eingeschraubt, der einen rohrförmigen Abschnitt 4A mit einem Außengewinde 5 aufweist. An dem rohrförmigen Teil 4A ist ein durch Verstärkungsrippen 6 verstärkter Flansch 7 befestigt, der sich auf der Stirnfläche 1A des Kraftstoffeinfüllstutzens 1 unter Zusammenpressen einer Dichtung 3 abstützt. Das Flanschteil 7 und das rohrförmige Teil 4A sind durch Ultraschallschweißung miteinander verbunden. Das Flanschteil 7 weist eine Innenschulter auf, die als Dichtsitz 8 für eine Verschlußklappe 9 ausgebildet ist. Die Verschlußklappe 9 ist außenseitig mit einer Dichtmembran 10 belegt. Die Dichtmembran wird auf der Verschlußklappe 9 mittels einer Abdeckkappe 11 gehalten. Die Abdeckkappe 11 ist mit Hilfe eines Klippverschlusses 12 in eine zentrale Bohrung der Verschlußklappe 9 eingerastet.

Zur schwenkbaren Lagerung der Verschlußklappe 9 ist an deren Unterseite ein Schwenkarm 13 befestigt, der aus zwei parallelen Stegen besteht. Der Schwenkarm 13 erstreckt sich an einer Seite der Verschlußklappe 9 über deren Außenrand hinaus. Am Endbereich des Schwenkarmes 13 weist dieser einen Höcker 13A auf, der in eine stirnseitige, gekrümmte Steuerfläche 13B übergeht. Der Endbereich des Schwenkarmes 13 ragt in eine Ausnehmung des Flanschteils 7. Diese Ausnehmung des Flanschteils 7 weist eine zur Längsachse des Kraftstoffbehälterverschlusses senkrechte Stützfläche 14 auf. Auf der Stützfläche 14 stützt sich der Schwenkarm 13 mit seinem Höcker 13A ab, derart, daß die Bewegung des Endbereichs des Schwenkarms in Richtung auf den Mündungsbereich des Kraftstoffeinfüllstutzens begrenzt ist, andererseits jedoch der Schwenkarm im Prinzip in die entgegengesetzte Richtung, also in Richtung auf das Innere des Kraftstoffeinfüllstutzens, beweglich ist. Die Stützfläche 14 ist eben, so daß der Höcker 13A und die stirnseitige, gekrümmte Steuerfläche 13B über die Stützfläche 14 gleiten können.

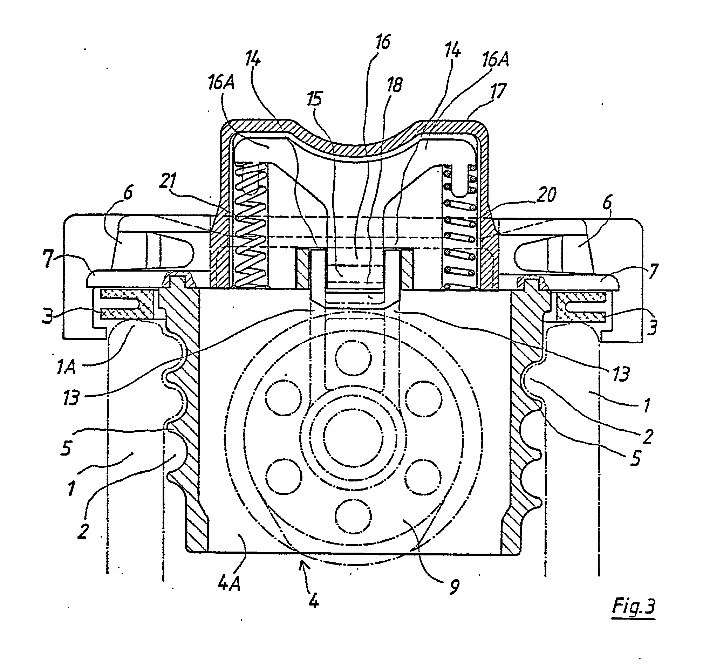

In dem Bereich zwischen der Verschlußklappe 9 und dem Höcker 13A des Schwenkarmes 13 ist ein Querbolzen 15 angeordnet, der die beiden Stege des Schwenkarmes 13 verbindet. An dem Querbolzen 15 ist ein im Querschnitt J-förmiger Bügel 16 angelenkt, der in ein Federgehäuse 17 hineinragt, das über den Mündungsrand des Kraftstoffbehälterverschlusses in axialer Richtung vorsteht. Der Bügel 16 ist in Richtung auf das Gehäuse 17 durch Federmittel vorgespannt, was im einzelnen anhand der Darstellung der Fig. 3 weiter unten erörtert wird. Am äußersten Ende des Schwenkarmes 13 ist ein weiterer, zum Innern des Kraftstoffeinfüllstutzens weisender Höcker angeordnet, der einen stiftförmigen Nocken 18 trägt. In der Außenwand des rohrförmigen Teils 4A des Kraftstoffbehälterverschlusses ist eine Ausnehmung vorgesehen, in der ein Stößel 19 axial verschieblich geführt ist. Der Stößel 19 stützt sich mit einer axialen Stirnseite 19A an dem Nocken 18 ab.

Der selbstschließende Kraftstoffbehälterverschluß arbeitet wie folgt:
Der selbstschließende Kraftstoffbehälterverschluß 4 wird anstelle eines Tankdeckels mit Außengewinde mit seinem rohrförmigen, das Außengewinde 5 aufweisenden Teil 4A in einen Kraftstoffeinfüllstutzen 1 mit Innengewinde 2 eingeschraubt, wobei die Dichtung 3 durch den Flansch 7 zusammengepreßt und somit eine dichte Verbindung zwischen dem Kraftstoffeinfüllstutzen 1 und dem Kraftstoffbehälterverschluß 4 hergestellt wird.

Da der Schwenkarm 13 mit seinem höckerförmigen Ansatz 13A sich an der axialen Stützfläche 14 abstützt und da andererseits an dem Querbolzen 15 über den Bügel 16 eine Federkraft in Richtung auf die Stützfläche 14 wirkt, erfahren der Schwenkarm 13 und die Verschlußklappe 9 ein Drehmoment, das die Verschlußklappe 9 mit ihrer Dichtmembran 10 gegen den Dichtsitz 8 drückt. Die Größe des schließenden Drehmomentes ergibt sich aus dem Abstand zwischen dem Anlagepunkt des Höckers 13A an der Stützfläche 14 und der Kraftrichtung des Bügels 16.

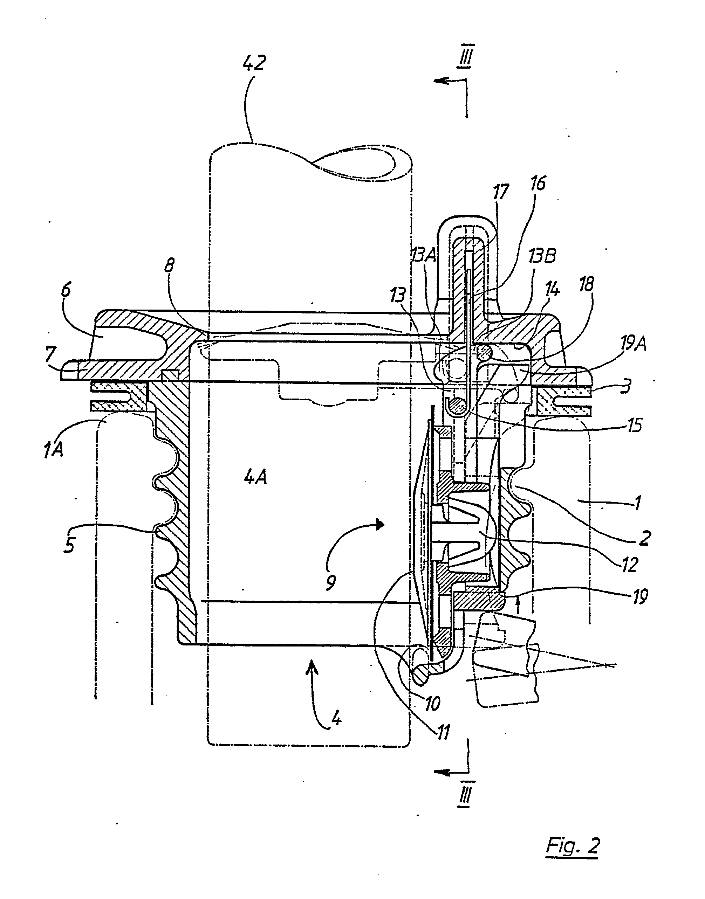

Zum Einfüllen von Kraftstoff in den Kraftstoffeinfüllstutzen 1 wird in den Behälterverschluß eine Zapfpistole 42 (Fig. 2) eingeführt, durch die die Schwenkklappe 9 in Richtung auf das Innere des Kraftstoffeinfüllstutzens verschwenkt wird. Diese Position der Verschlußklappe ist in Fig. 2 dargestellt. Wie aus der Zusammenschau der Fig. 1 und 2 hervorgeht, verschiebt sich der Auflagepunkt des endseitigen Bereichs des Schwenkarmes 13, ausgehend von dem Höcker 13A zu der stirnseitigen gekrümmten Steuerfläche 13B. Der Querbolzen 15 bewegt sich bei der Öffnungsbewegung der Schwenkklappe 9 in axialer Richtung auf das Innere des Kraftstoffeinfüllstutzens zu, wobei durch das Federgehäuse 17 für eine Führung in axialer Richtung gesorgt ist und radiale oder tangentiale Bewegungen des Bügels 16 und des Querbolzens 15 verhindert sind.

Wie aus Fig. 2 deutlich hervorgeht, kann die Verschlußklappe 9 um nahezu 90° verschwenkt werden, so daß der Zugang zu dem Kraftstoffeinfüllstutzen für die Zapfpistole 42 vollkommen freigegeben wird. In dem Bereich, in dem sich die Verschlußklappe 9 an die Wand des rohrförmigen Teiles 4A des Kraftstoffeinfüllstutzens 1 anlegt, befinden sich keine Federmittel, die der Öffnungsbewegung der Verschlußklappe 9 im Wege stehen könnten. Wie aus Fig. 2 hervorgeht, ist der Abstand zwischen dem auf den Querbolzen 15 wirkenden Kraftvektor und dem Auflagepunkt des Schwenkarmes 13 an der Stützfläche 14 kleiner als bei der Stellung gemäß Fig. 1, wodurch das auf die Verschlußklappe 9 ausgeübte Drehmoment ebenfalls kleiner wird. Allerdings ist die auf den Querbolzen 15 wirkende Kraft größer, da der Bügel 16 aus seinem Federgehäuse 17 herausgezogen worden ist und seine zugehörige Rückstellfeder, die weiter unten beschrieben wird, zusätzlich gespannt ist. Die Vergrößerung der Federkraft wird jedoch durch die oben beschriebene Verkleinerung des Hebelarmes kompensiert. Somit wird erreicht, daß die Verschlußklappe 9 ein Schließdrehmoment erfährt, das möglichst gleichbleibend ist und sich jedenfalls nicht bei geöffneter Verschlußklappe wesentlich erhöht.

Die Bewegung, die der Nocken 18 am äußersten Ende des Schwenkarmes 13 erfährt, kann zur Betätigung eines Ausgleichbehälterventils (nicht dargestellt) ausgenutzt werden. Wie aus einem Vergleich der Fig. 1 und 2 hervorgeht, bewegt sich der Nocken 18 beim Öffnen der Verschlußklappe 9 in axialer Richtung auf das offene Ende des Kraftstoffbehälterverschlusses hin. Der in der Wandung des rohrförmigen Teils 4A des selbstschließenden Kraftstoffbehälterverschlusses 4 geführte Stößel 19 wird daher bei geöffneter Klappe 9 freigegeben, so daß er in Richtung auf das offene Ende des Kraftstoffeinfüllstutzens in verschiebbar ist.

Ein durch eine Feder vorgespannter Steuerhebel eines Ausgleichbehälterventils (nicht dargestellt) kann sich daher in der gleichen Richtung bewegen, wodurch das Ausgleichsbehälterventil geschlossen wird, so daß in den Ausgleichsbehälter während der Offenstellung der Klappe 9, also bei Einfüllen des Kraftstoffes in den Tank, kein Kraftstoff eintreten kann. Beim Schließen der Verschlußklappe 9 drückt jedoch der Nocken 18 den Stößel 19 in das Innere des Kraftstoffeinfüllstutzens, wodurch das Ausgleichsbehälterventil geöffnet wird, so daß infolge einer Erwärmung sich ausdehnender Kraftstoff in den Ausgleichsbehälter eindringen kann.

Anhand der Darstellung der Fig. 3 wird im folgenden die Spanneinrichtung beschrieben, die aus dem Bügel 16 und den diesem zugeordneten Federn besteht. Fig. 3 zeigt einen Schnitt längs der Schnittlinie III-III in Fig. 2.

Wie aus der Zusammenschau der Fig. 1 und 3 hervorgeht, ist das Federgehäuse 17 ein etwa rechteckiger flacher Aufbau, der über den Flansch 7 in axialer Richtung vorsteht. In dem Federgehäuse 17 ist der im Querschnitt J-förmige Bügel 16 axial verschieblich geführt. Der Bügel 16 weist einen Querarm 16A auf, so daß er in der Draufsicht die Form eines T aufweist.

Wie bereits anhand der Fig. 1 und 2 beschrieben worden ist, ist der im Querschnitt J-förmige Bügel 16 mit seinem unteren, etwa halbkreisförmig umgebogenen Ende an dem Querbolzen 15 des Schwenkarmes 13 eingehängt. In dem Federgehäuse 17 sind in den äußeren Schmalseiten zwei Axialbohrungen vorgesehen, in denen zwei Druckfedern 20 und 21 angeordnet sind. Durch die beiden Druckfedern 20 und 21 wird der Bügel 16 in der Richtung vorgespannt, daß er den Schwenkarm 13 der Verschlußklappe 19 in Richtung auf die Stützfläche 14 zieht.

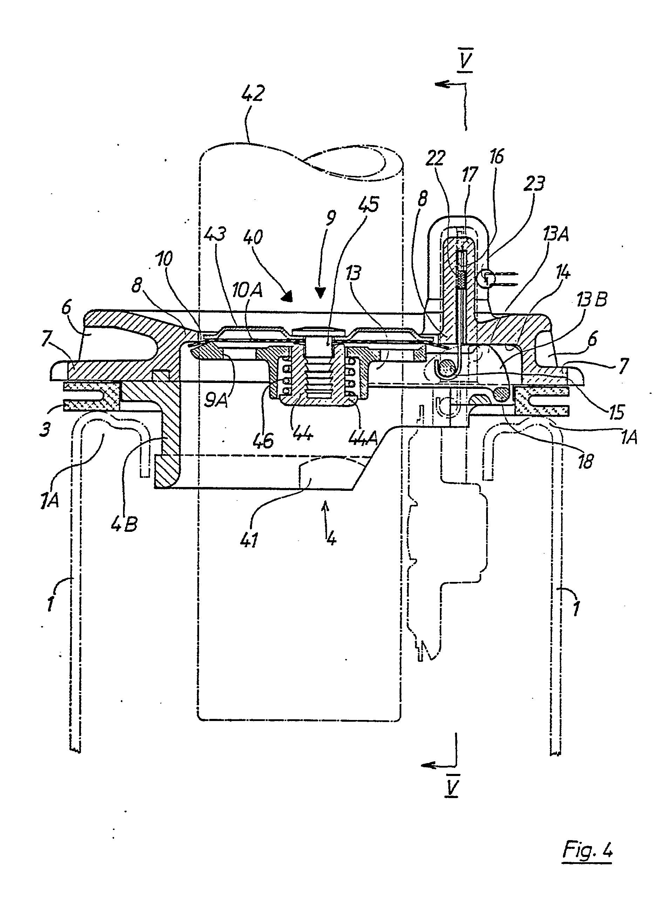

In Fig. 4 ist ein weiteres Ausführungsbeispiel dargestellt. Das in Fig. 4 dargestellte Ausführungsbeispiel unterscheidet sich von dem Ausführungsbeispiel der Fig. 1 bis 3 dadurch, daß in der Verschlußklappe 9 ein Überdrucksicherheitsventil 40 angeordnet ist, über das Kraftstoffdämpfe bei einem Überdruck im Innern des Kraftstoffbehälters ins Freie austreten können.

Das Überdrucksicherheitsventil 40, das besonders klein baut, ist wie folgt realisiert:

Die Dichtmembran 10 wird durch einen Teller 43 randseitig auf die Verschlußklappe 9 gepreßt. Zur Erzeugung des notwendigen Anpreßdruckes is der Teller 43 an einem axial geführten Zylinder 44 mittels eines Steckbolzens 45 zentral befestigt. Der Zylinder weist eine Schulter 44A auf, an der sich eine Druckfeder 46 abstützt, die mit ihrem anderen Ende an der Verschlußklappe 9 anliegt, so daß der Zylinder 44 und damit der die Dichtmembran 10 anpressende Teller 11 in Richtung auf das Innere des Kraftstoffeinfüllstutzens 1 vorgespannt wird. Die Dichtmembran is außer im randseitigen Bereich mit Löchern 10A versehen. Entsprechende Löcher 9A sind in der Verschlußklappe 9 vorhanden. Entwickelt sich im Innern des Kraftstoffbehälters ein Überdruck, so liegt dieser an der Unterseite des Tellers 43 an. Wenn der Überdruck einen Schwellenwert erreicht hat, wird er den Teller 43, dessen Durchmesser kleiner als die lichte Weite des Dichtsitzes 8 ist, gegen die Kraft der Feder 46 anheben, so daß der Rand des Tellers 43 von der Dichtmembran 10 abhebt und für die Dämpfte der Weg nach außen freigegeben wird.

Da der selbstschließende Kraftstoffbehälterverschluß gemäß der Erfindung äußerst klein baut, kann er für alle Arten von Kraftstoffeinfüllstutzen verwendet werden. Im Ausführungsbeispiel der Fig. 4 ist ein Kraftstoffbehälterverschluß 4 gezeigt, der für einen Kraftstoffeinfüllstutzen mit Innenbajonett bestimmt ist. Zu diesem Zweck weist der Kraftstoffbehälterverschluß ein Innenbajonettverschlußteil 4B mit Fanghaken 41 auf, die an der inneren Anlauframpe des umgestülpten Randbereichs 1A des Kraftstoffeinfüllstutzens 1 anlaufen und somit den Flansch 7 gegen den mit der Dichtung 3 bedeckten Mündungsrand 1A des Kraftstoffeinfüllstutzens 1 pressen. Das Innenbajonettverschlußteil 4B ist mit dem Flanschteil 7 druch Ultraschallverschweißung verbunden. Dank der kompakten Konstruktionsweise ist die Befestigung des selbstschließenden Kraftstoffbehälterverschlusses auf keine bestimmte Drehposition beschränkt, insbesondere ist es nicht erforderlich, daß das Lager der Schwenkklappe 9 in dem Bereich liegt, in dem der umgestülpte Randbereich des Kraftstoffeinfüllstutzens durch Ausnehmungen zum Zwecke der Einführung der Fanghaken 41 unterbrochen ist. Vielmehr kann der Kraftstoffeinfüllstutzen in jeder beliebigen Drehposition angeordnet werden, so daß er vorzugsweise so konzipiert wird, daß das Lager des Schwenkarmes 13 der Verschlußklappe 9 seitlich liegt. Die Klappe 9 weicht der eingeführten Zapfpistole 42 somit seitlich aus, was vorteilhaft ist, weil die Seitenwand der Zapfpistole üblicherweise glatt ist und das Einführen der Zapfpistole infolgedessen nicht durch Unebenheiten behindert wird.

Zur Betätigung eines Magnet ventil (nicht dargestellt) eines Ausgleichsbehälters ist an dem Federgehäuse 17 ein Magnetschalter (REED-Schalter 23 angeordnet. Eine aus einem Dauermagneten 22 bestehende Auslöseeinrichtung ist an dem Bügel 16 befestigt. Durch Öffnen und Schließen der Verschlußklappen 9 gelangt der Dauermagnet 22 in die Nähe des Magnetschalter 23 bzw. wird von diesem entfernt, so daß sich die Kontakte des Magnetschalter öffnen bzw. schließen, was zur Ansteuerung eines Magnetventils in an sich bekannter Weise ausgenützt werden kann.

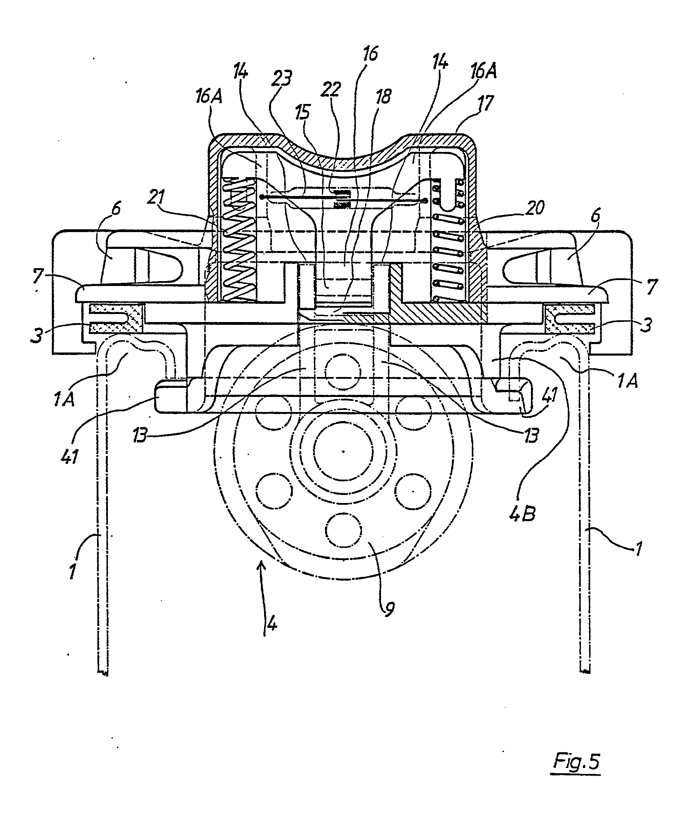

Fig. 5 zeigt den Kraftstoffbehälterverschluß gemäß Fig. 3 im Schnitt längs der Schnittlinie V-V. In dieser Schnittdarstellung sind besonders deutlich die Fanghaken 41 zu erkennen, die den Verschluß 4 wie einen Tankdeckel auf dem Kraftstoffeinfüllstutzen 1 mit Innenbajonett festhalten. In Fig. 5 wird auch die Anordnung des Permanentmagneten 22 auf dem Bügel 16 sowie die Anordnung des Magnetschalters 23 deutlich.

Das Flanschteil 7 kann mit einem rohrförmigen Gewindeteil 4A (Fig.1, 2 und 3) oder mit einem Innenbajonettverschlußteil 4B (Fig. 4 und 5) verbunden werden, so daß der Kraftstoffbehälterverschluß für alle möglichen Befestigungsarten geeignet ist. Ersichtlich können die Teile 4A und 4B durch ein Außenbajonettverschlußteil (nicht dargestellt) ebenso leicht ersetzt werden. Auch die direkte Befestigung des Flanschteils auf dem Mündungsrand (etwa durch Verschweißen oder Verklammern) ist möglich. Eine solche Ausführungsform kommt insbesondere bei der Erstausrüstung eines Kraftfahrzeuges in Betracht, während die in den Fig. 1 bis 5 dargestellten Ausführungsformen zur Nachrüstung von Kraftfahrzeugen vorgesehen sind, bei denen der Kraftstoffbehälterverschluß gemäß der Erfindung wie ein Tankdeckel auf dem Kraftstoffeinfüllstutzen befestigt wird.

Dank seiner kleinen Bauweise ist der Kraftstoffbehälterverschluß gemäß der Erfindung zum Einsatz bei allen gängigen Kraftstoffeinfüllstutzen aller üblichen Fahrzeugtypen geeignet.

**Patentansprüche**

1. Selbstschließender Kraftstoffbehälterverschluß (4) zur Befestigung auf einem Kraftstoffeinfüllstutzen (1) mit einer in Richtung auf einen Dichtsitz (8) vorgespannten, in Richtung auf das Innere des Einfüllstutzens verschwenkbaren Verschlußklappe (9), die von einem endseitig gelagerten Schwenkarm (13) getragen ist, dadurch **gekennzeichnet,** daß das freie Ende des Schwenkarms (13A, 13B) sich auf einer etwa senkrecht zur Längsachse des Kraftstoffbehälterverschlusses (4) verlaufenden Stützfläche (14) abstützt, und daß an dem Schwenkarm (13) im Bereich zwischen dem freien Ende (13A, 13B) und der Verschlußklappe (9) eine Spanneinrichtung (16, 20, 21) befestigt ist, die die Verschlußklappe (9) in Richtung auf den Dichtsitz (8) vorspannt.

2. Selbstschließender Kraftstoffbehälterverschluß nach Anspruch 1, dadurch gekennzeichnet, daß das freie Ende (13A, 13B) des Schwenkarms (13) als Steuerkurve ausgebildet ist, die beim Verschwenken der Verschlußklappe (9) über die Stützfläche (14) gleitet.

3. Selbstschließender Kraftstoffbehälterverschluß nach Anspruch 2, dadurch gekennzeichnet, daß die Steuerkurve so geformt ist, daß die Verschlußklappe (9) im Laufe der Öffnungsbewegung in Richtung auf das Innere des Kraftstoffeinfüllstutzens (4) translatorisch verschoben wird.

4. Selbstschließender Kraftstoffbehälterverschluß nach einem der Anprüche 1 bis 3, dadurch gekennzeichnet, daß die Stützfläche (14) an einer Axialposition in der Nähe des Mündungsrandes (1A) des Kraftstoff einfüllstutzens (1) liegt.

5. Selbstschließender Kraftstoffbehälterverschluß nach einem der Ansprüche 1 bis 4, dadurch gekennzeichnet, daß die Spanneinrichtung aus einem an dem Schwenkarm angelenkten Bügel (16) besteht, der durch mindestens eine Feder (20, 21) vorgespannt ist.

6. Selbstschließender Kraftstoffbehälterverschluß nach Anspruch 5, dadurch gekennzeichnet, daß der Bügel (16) in einer Axialführung gleitet.

7. Selbstschließender Kraftstoffbehälterverschluß nach Anspruch 5 oder 6, dadurch gekennzeichnet, daß die Feder (20, 21) in einem Federgehäuse (17) angeordnet ist, das über den Mündungsrand des Kraftstoffbehälterverschlusses (4) in Axialrichtung vorsteht.

8. Selbstschließender Kraftstoffbehälterverschluß nach Anspruch 5, 6 oder 7, dadurch gekennzeichnet, daß die Feder (20, 21) eine Druckfeder ist.

9. Selbstschließender Kraftstoffbehälterverschluß nach einem der Ansprüche 5 bis 8, dadurch gekennzeichnet, daß zwei parallele Federn (20, 21) vorgesehen sind.

10. Selbstschließender Kraftstoffbehälterverschluß (4) zur Befestigung auf einem Kraftstoffeinfüllstutzen (1), mit einer in Richtung auf einen Dichtsitz (8) vorgespannten, in Richtung auf das Innere des Einfüllstutzens verschwenkbaren Verschlußklappe (9), die von einem endseitig gelagerten Schwenkarm getragen ist, insbesondere nach einem der Ansprüche 1 bis 9, dadurch gekennzeichnet, daß an seinen beweglichen Teilen (13, 16) eine Betätigungseinrichtung (18, 19) zur Betätigung eines Ventils angeordnet ist.

11. Selbstschließender Kraftstoffbehälterverschluß nach Anspruch 10, dadurch gekennzeichnet, daß die Betätigungseinrichtung aus einem Nocken (18) und einem Stößel (19) besteht.

12. Selbstschließender Kraftstoffbehälterverschluß nach Anspruch 10, dadurch gekennzeichnet, daß die Betätigungseinrichtung einen elektrischen Schalter (23) umfaßt.

13. Selbstschließender Kraftstoffbehälterverschluß nach Anspruch 12, dadurch gekennzeichnet, daß die Betätigungseinrichtung einen Dauermagnet (22) aufweist.

14. Selbstschließender Kraftstoffbehälterverschluß (4) zur Befestigung auf einem Kraftstoffeinfüllstutzen (1), mit einer in Richtung auf einen Dichtsitz (8) vorgespannten, in Richtung auf das Innere des Einfüllstutzens verschwenkbaren Verschlußkappe (9), die von einem endseitig gelagerten Schwenkarm (13) getragen ist, insbesondere nach einem der Ansprüche 1 bis 13, dadurch gekennzeichnet, daß in der Verschlußklappe (9) ein Überdrucksicherheitsventil (40) angeordnet ist, das mindestens ein in der Verschlußklappe (9) angeordnetes Loch (9A) und einen die Verschlußklappe (9) von außen bedeckenden, in Richtung auf die Verschlußklappe (9) elastisch vorgespannten Teller (43) umfaßt.

15. Selbstschließender Kraftstoffbehälterverschluß nach Anspruch 14, dadurch gekennzeichnet, daß zur elastischen Vorspannung des Tellers (43) dieser mit einem Zentral in der Verschlußklappe (9) angeordneten durch eine Feder (46) vorbelasteten Zylinder (44) verbunden ist.

## Claims

1. A self-closing fuel tank seal (4) for securing to a fuel filler connector (1) having a sealing flap (9) pretensioned in the direction of a seal seat (8) and swivel-mounted in the direction of the interior of the filler connector and supported by a swivel arm (13) mounted at one end characterized in that the free end of said swivel arm (13A, 13B) is supported by a supporting area (14) running roughly vertical to the longitudinal axis of said fuel tank seal (4) and in that on said swivel arm (13) in the region between said free end (13A, 13B) and said sealing flap (9) clamping means (16, 20, 21) are provided for pretensioning said sealing flap (9) in the direction of said seal seat.

2. A self-closing fuel tank seal according to claim 1, wherein said free end (13A, 13B) of said swivel arm (13) has the form of a radial cam which glides over the supporting area (14) when the sealing flap (9) is swivelled.

3. A self-closing fuel tank seal according to claim 2, wherein the radial cam is formed so that said sealing flap (9) during the opening movement is shifted accordingly in the direction of the interior of said fuel filler connector (1).

4. A self-closing fuel tank seal according to any of the claims 1 thru 3, wherein said supporting area (14) is located in an axial position in the vicinity of the mouth (1A) of the fuel filler connector (1).

5. A self-closing fuel tank seal according to any of the claims 1 thru 4, wherein said clamping means comprise a bracket (16) provided to pivot on said swivel arm and which is pretensioned by at least one spring (20, 21).

6. A self-closing fuel tank seal according to claim 5, wherein said bracket (16) glides in an axial guide.

7. A self-closing fuel tank seal according to claim 5 or claim 6, wherein said spring (20, 21) is arranged in a spring housing (17) protruding from the mouth of said fuel tank seal (4) in axial direction.

8. A self-closing fuel tank seal according to claims 5, 6 or 7, wherein said spring (20, 21) is a compression spring.

9. A self-closing fuel tank seal according to any of the claims 5 thru 9, wherein two parallel springs (20, 21) are provided.

10. A self-closing fuel tank seal (4) for securing to a fuel filler connector (1) having a sealing flap (9) pretensioned in the direction of a seal seat (8) and swivel-mounted in the direction of the interior of the filler connector and supported by a swivel arm mounted at one end particularly in accordance with any of the claims 1 thru 9, wherein actuating means (18, 19) are provided on its moving parts (13, 16) for actuating a valve.

11. A self-closing fuel tank seal according to claim 10, wherein said actuating means comprise a cam (18) and a cam follower (19).

12. A self-closing fuel tank seal according to claim 10, wherein said actuating means comprise an electric switch (23).

13. A self-closing fuel tank seal according to claim 12, wherein said actuating means comprise a permanent magnet (22).

14. A self-closing fuel tank seal (4) for securing to a fuel filler connector (1) having a sealing flap (9) pretensioned in the direction of a seal seat (8) and swivel-mounted in the direction of the interior of the filler connector and supported by a swivel arm mounted at one end particularly in accordance with any of the claims 1 thru 13, wherein a pressure relief valve (40) is provided in said sealing flap, said valve having at least one hole (9A) arranged in said sealing flap (9) and a flexible plate (43) pretensioned in the direction of said sealing flap (9) and covering said sealing flap (9) from without.

15. A self-closing fuel tank seal according to claim 14, wherein to flexibly pretension said plate (43) the latter is connected to a cylinder (44) preloaded by a spring (46) arranged centrally in said sealing flap (9).

## Revendications

1. Fermeture de réservoir de carburant (4) auto-verrouillable, à fixer sur une tubulure de remplissage de carburant (1), comportant un clapet de fermeture (9) précontraint en direction d'un siège étanche (8), pivotant en direction de l'intérieur de la tubulure de remplissage, lequel clapet est porté par un bras de pivotement (13) monté à une extrémité, caractérisée en ce que l'extrémité libre du bras de pivotement (13A, 13B) prend appui sur une surface d'appui (14) à peu près perpendiculaire à l'axe longitudinal de la fermeture de réservoir de carburant (4), et en ce qu'un dispositif de serrage (16, 20, 21) qui précontraint le clapet de fermeture (9) en direction du siège étanche (8), est fixé sur le bras de pivotement (13), dans la région située entre l'extrémité libre (13A, 13B) et le clapet de fermeture (9).

2. Fermeture de réservoir de carburant autoverrouillable selon la revendication 1, caractérisée en ce que l'extrémité libre (13A, 13B) du bras de pivotement (13) est configurée en came de commande qui glisse sur la surface d'appui (14), lors du pivotement du clapet de fermeture 9.

3. Fermeture de réservoir de carburant autoverrouillable selon la revendication 2, caractérisée en ce que la came de commande a une forme telle que le clapet de fermeture (9) est déplacé dans un mouvement de translation, pendant le mouvement d'ouverture, en direction de l'intérieur de la tubulure de remplissage de carburant (4).

4. Fermeture de réservoir de carburant autoverrouillable selon l'une des revendications 1 à 3, caractérisée en ce que la surface d'appui (14) se situe dans une position axiale, à proximité du bord d'embouchure (1A) de la tubulure de remplissage de carburant (1).

5. Fermeture de réservoir de carburant auto-verrouillable selon l'une des revendications 1 à 4, caractérisée en ce que le dispositif de serrage est constitué d'un étrier (16) s'articulant sur le bras de pivotement et précontraint par au moins un ressort (20, 21).

6. Fermeture de réservoir de carburant autoverrouillable selon la revendication 5, caractérisée en ce que l'étrier (16) glisse dans un organe de guidage axial.

7. Fermeture de réservoir de carburant autoverrouillable selon la revendication 5 ou 6, caractérisée en ce que le ressort (20, 21) est placé dans un boîtier de ressort (17) qui fait saillie axialement, par rapport au bord d'embouchure de la fermeture de réservoir de carburant (4).

8. Fermeture de réservoir de carburant autoverrouillable selon la revendication 5, 6 ou 7, caractérisée en ce que le ressort (20, 21) est un ressort de pression.

9. Fermeture de réservoir de carburant autoverrouillable selon l'une des revendications 5 à 8, caractérisée en ce qu'on prévoit deux ressorts parallèles (20, 21).

10. Fermeture de réservoir de carburant (4) autoverrouillable à fixer sur une tubulure de remplissage de carburant (1), comportant un clapet de fermeture (9) précontraint en direction d'un siège étanche (8), pivotant en direction de l'intérieur de la tubulure de remplissage, lequel clapet est porté par un bras de pivotement (13) monté à une extrémité, en particulier selon l'une des revendications 1 à 9, caractérisée en ce qu'on place un dispositif d'actionnement (18, 19) sur ses éléments (13, 16) mobiles, pour actionner une soupape.

11. Fermeture de réservoir de carburant autoverrouillable selon la revendication 10, caractérisée en ce que le dispositif d'actionnement est constitué d'une came (18) et d'un poussoir (19).

12. Fermeture de réservoir de carburant autoverrouillable selon la revendication 10, caractérisée en ce que le dispositif d'actionnement comprend un interrupteur électrique (23).

13. Fermeture de réservoir de carburant autoverrouillable selon la revendication 12, caractérisée en ce que le dispositif d'actionnement comporte un aimant permanent (22).

14. Fermeture de réservoir de carburant (4) auto-verrouillable à fixer sur une tubulure de remplissage de carburant (1), comportant un clapet de fermeture (9) précontraint en direction d'un siège étanche (8), pivotant en direction de l'intérieur de la tubulure de remplissage, lequel clapet est porté par un bras de pivotement (13) monté à une extrémité, en particulier selon l'une des revendications 1 à 13, caractérisée en ce qu'on place, dans le clapet de fermeture (9), une soupape de surpression (40) qui comporte au moins un trou (9A), pratiqué dans le clapet de fermeture (9) et une tête (43) recouvrant de l'extérieur le clapet de fermeture (9), précontrainte élastiquement en direction du clapet de fermeture (9).

15. Fermeture de réservoir de carburant auto-verrouillable selon la revendication 14, caractérisée en ce que pour la précontrainte élastique de la tête (43), celle-ci est reliée à un cylindre (44), précontraint par un ressort (46) et placé au centre du clapet de fermeture (9).

EP 0 296 618 B1

Fig. 1

EP 0 296 618 B1

Fig. 2

EP 0 296 618 B1

Fig.3

Fig. 4

_Fig.5_